# EUROPÄISCHE PATENTSCHRIFT

(11) **EP 3 176 324 B1**
(45) Veröffentlichungstag und Bekanntmachung des Hinweises auf die Patenterteilung: **26.09.2018**
(21) Anmeldenummer: 16200911.2
(22) Anmeldetag: 28.11.2016
(51) Int. Cl.: E01C 19/28

(54) **VERFAHREN ZUR ERMITTLUNG DES VERDICHTUNGSZUSTANDES EINES UNTERGRUNDS**
METHOD FOR DETERMINING THE COMPACTION OF A SUBSTRATE
PROCÉDÉ DE DÉTERMINATION D'UN ÉTAT DE COMPACTAGE D'UN SOUS-SOL

(30) Priorität: 02.12.2015 DE 102015120874
(43) Veröffentlichungstag der Anmeldung: 07.06.2017
(73) Patentinhaber: Hamm AG, 95643 Tirschenreuth (DE)
(72) Erfinder: Pistrol, Johannes, 2340 Mödling (AT); Kopf, Fritz, 1140 Wien (AT); Völkel, Werner, 92660 Neustadt (DE); Villwock, Sebastian, 95701 Pechbrunn (DE)
(74) Vertreter: RLTG

(56) Entgegenhaltungen:
- DE-C2- 3 590 610
- DE-C2- 3 707 648
- GB-A- 1 224 123
- KIRSCHNER R: "ERFAHRUNGEN MIT DER FLACHENDECKENDEN, DYNAMISCHEN VERDICHTUNGSKONTROLLE IM ERDBAU", STRASSE UND VERKEHR/ROUTE ET TRAFIC, VSS. ZURICH, CH, 1. Oktober 1988 (1988-10-01), Seiten 637-641, XP000003025, ISSN: 0039-2189

## Beschreibung

Die vorliegende Erfindung betrifft ein Verfahren zum Ermitteln des Verdichtungszustandes eines Untergrundes, der vermittels eines Bodenverdichters mit wenigstens einer um eine Walzendrehachse drehbaren Verdichterwalze zu verdichten ist.

Zum Verdichten von Untergrund, wie z.B. im Straßenbau ausgebrachtem Asphalt, werden Bodenverdichter eingesetzt, die über das Aufstandsgewicht einer oder mehrerer Verdichterwalzen und der dadurch auf den zu verdichtenden Untergrund im Wesentlichen vertikal ausgeübten Belastung zu einer Komprimierung des Untergrunds und damit einer Erhöhung des Verdichtungsgrades führen. Um dabei das Verdichtungsergebnis zu verbessern, ist es bekannt, einer oder mehreren Verdichterwalzen eines Bodenverdichters eine Oszillationsanregungsordnung zuzuordnen, durch welche aufgrund der Erzeugung eines periodischen Oszillationsdrehmomentes die Verdichterwalze in eine entsprechend periodische Oszillationsbewegung bzw. Oszillationsdrehbewegung, also eine alternierende Hin- und Herdrehbewegung um die Walzendrehachse versetzt wird. Diese oszillierende Drehbewegung der Verdichterwalze wird der bei der Voranbewegung des Verdichters grundsätzlich vorhandenen Drehbewegung der Verdichterwalze um ihre Walzendrehachse überlagert.

Aus der DE 35 90 610 C2 ist es bekannt, aus dem zeitlichen Verlauf der durch Erzeugung eines Oszillationsdrehmoments generierten Oszillationsdrehbewegung einer Verdichterwalze, insbesondere der erfassten Horizontalbeschleunigung der Achse der Verdichterwalze, auf den Verdichtungsgrad zu schließen.

Die DE 37 07 684 C2 offenbart ein Verfahren zur Bestimmung des Verdichtungsgrades eines mittels einer Verdichterwalze zu verdichtenden Untergrunds. Bei diesem Verfahren wird die Vertikalbeschleunigung einer durch eine Vibrationsanordnung in eine Vertikalschwingungsbewegung versetzten Verdichterwalze erfasst. Da mit zunehmender Verdichtung die Vertikalbewegung der Verdichterwalze sich ändert, kann die Entwicklung der Vertikalbeschleunigung der Verdichterwalze als Indikator für den Verdichtungszustand eines zu verdichtenden Untergrundes herangezogen werden.

Aus dem Artikel "Erfahrungen mit der flächendeckenden, dynamischen Verdichtungskontrolle im Erdbau" von Reinhard Kirschner, veröffentlicht in "strasse und verkehr Nr. 10 Oktober 1988" ist es bekannt, für eine dynamische Verdichtungskontrolle die an einer Verdichterwalze auftretende Beschleunigung mit zwei zueinander unter einem Winkel von 90° und bezüglich einer Vertikalen unter einem Winkel von 45° angeordneten Beschleunigungsaufnehmern eine horizontale Komponente und eine vertikale Komponente der Beschleunigung zu erfassen. Auf der Grundlage dieser Werte kann ein als Omegawert bezeichneter aktueller Messwert der Verdichtung generiert und angezeigt werden.

Es ist die Aufgabe der vorliegenden Erfindung, ein Verfahren zum Ermitteln des Verdichtungszustandes eines Untergrundes bereitzustellen, welches mit einfachen Mitteln eine exakte Bestimmbarkeit des Verdichtungszustandes eines zu verdichtenden Untergrundes während der Durchführung des Verdichtungsvorgangs zulässt.

Erfindungsgemäß wird diese Aufgabe gelöst durch ein Verfahren zum Ermitteln des Verdichtungszustandes eines vermittels eines wenigstens eine um eine Walzendrehachse drehbare Verdichterwalze umfassenden Bodenverdichters zu verdichtenden Untergrundes, wobei wenigstens einer Verdichterwalze des Bodenverdichters eine Oszillationsanregungsanordnung zugeordnet ist zur Erzeugung eines diese Verdichterwalze zu einer oszillierenden Drehbewegung um die Walzendrehachse anregenden Oszillationsdrehmomentes, wobei das Verfahren die Maßnahmen umfasst:
a) während wenigstens einer Periode der Oszillationsbewegung der Verdichterwalze, wiederholtes Ermitteln eines eine Beschleunigung der Verdichterwalze in einer ersten Richtung repräsentierenden ersten Beschleunigungswertes,
b) in Zuordnung zu jedem ersten Beschleunigungswert, Ermitteln eines eine Beschleunigung der Verdichterwalze in einer zweiten Richtung repräsentierenden zweiten Beschleunigungswertes zum Bereitstellen von Beschleunigungswertepaaren jeweils aus einem ersten Beschleunigungswert und einem zugeordneten zweiten Beschleunigungswert,
c) für wenigstens eine Oszillationsperiode, Bestimmen eines den Verdichtungszustand des Untergrunds repräsentierenden Verdichtungszustandswertes beruhend auf für diese Oszillationsperiode ermittelten Beschleunigungswertepaaren.

Der vorliegenden Erfindung liegt die Erkenntnis zugrunde, dass während der Durchführung eines Verdichtungsvorganges vermittels einer zu einer oszillierenden Drehbewegung angeregten Verdichterwalze aufgrund der der Abrollbewegung der Verdichterwalze überlagerten Oszillationsdrehbewegung die Verdichterwalze sich in der durch diese selbst generierten Mulde periodisch auf- und abbewegt, dabei also eine Beschleunigung in vertikaler Richtung bzw. im Wesentlichen orthogonal zur Ebene des zu verdichtenden Untergrunds durchführt. Dies führt zu einer periodischen Änderung der Vertikalbeschleunigung der Verdichterwalze, wobei die Frequenz der Vertikalbeschleunigung bzw. der Vertikalbewegung der doppelten Frequenz der Oszillationsbewegung entspricht. Durch die während einer jeweiligen Oszillationsperiode generierten Beschleunigungswertepaare, welche in ihrer Gesamtheit für diese Oszillationsperiode die Entwicklung der Beschleunigung in den beiden Richtungen wiedergeben, kann auf den Verdichtungszustand des zu verdichtenden Untergrunds geschlossen werden.

Bei dem erfindungsgemäßen Verfahren ist vorgesehen, dass die Maßnahme c) das Bestimmen des Verdichtungszustandswertes als einen Flächenwert einer von einer durch in einer Oszillationsperiode aufeinander folgende Beschleunigungswertepaare gebildeten Beschleunigungswertepaarkurve umgrenzten Fläche in einem Beschleunigungswertediagramm umfasst, wobei das Beschleunigungswertediagramm definiert ist mit einer den ersten Beschleunigungswerten zugeordneten ersten Diagrammachse und einer den zweiten Beschleunigungswerten zugeordneten zweiten Diagrammachse. Da die Größe der Beschleunigung in horizontaler Richtung im Wesentlichen bestimmt ist durch das auf die Verdichterwalze ausgeübte Oszillationsdrehmoment, während die Vertikalbeschleunigung im Wesentlichen davon abhängt, wie hart der Untergrund ist und wie stark die Verdichterwalze sich in den zu verdichtenden Untergrund eindrückt und somit im Verlaufe einer Oszillationsbewegung auf- und abbewegt wird, repräsentiert die durch die für eine Oszillationsperiode erfassten Beschleunigungswertepaare definierte Beschleunigungswertepaarkurve eine Fläche, deren Größe vom Verdichtungszustand des Untergrunds abhängt.

Die erste Richtung entspricht im Wesentlichen einer Horizontalrichtung und die zweite Richtung entspricht im Wesentlichen einer Vertikalrichtung. Es sei hier darauf hingewiesen, dass die Horizontalrichtung im Sinne der vorliegenden Erfindung betrachtet werden kann als eine Richtung, welche zu einer durch den zu verdichtenden Untergrund aufgespannten Ebene im Wesentlichen parallel ist, während die Vertikalrichtung als zu diesem Untergrund bzw. der durch diesen aufgespannten Ebene im Wesentlichen orthogonale Richtung betrachtet werden kann.

Um mittels einfacher mathematischer Verfahren die Größe der von der Beschleunigungswertepaarkurve umspannten Fläche bestimmen zu können, kann bei dem erfindungsgemäßen Verfahren weiter vorgesehen sein, dass bei der Maßnahme c):
- auf Grundlage einer Abfolge von Beschleunigungswertepaaren entlang der ersten Diagrammachse eine Beschleunigungswertepaar-Schwingung definiert wird, wobei Beschleunigungswertepaare einer ersten Gruppe von Beschleunigungswertepaaren und einer zweiten Gruppe von Beschleunigungswertepaaren derart zugeordnet werden, dass die Beschleunigungswertepaare der ersten Gruppe von Beschleunigungswertepaaren im Wesentlichen obere Scheitelbereiche der Beschleunigungswertepaar-Schwingung bilden und die Beschleunigungswertepaare der zweiten Gruppe von Beschleunigungswertepaaren im Wesentlichen untere Scheitelbereiche der Beschleunigungswertepaar-Schwingung bilden,
- beruhend auf der ersten Gruppe von Beschleunigungswertepaaren eine obere Einhüllende ermittelt wird und beruhend auf der zweiten Gruppe von Beschleunigungswertepaaren eine untere Einhüllende ermittelt wird,
- der Flächenwert im Wesentlichen als die zwischen der oberen Einhüllenden und der unteren Einhüllenden begrenze Fläche bestimmt wird.

Die vorliegende Erfindung wird nachfolgend mit Bezug auf die beiliegenden Figuren detailliert beschrieben. Es zeigt:
- Fig. 1: in Seitenansicht und in prinzipieller Darstellung einen durch eine Verdichterwalze zu verdichtenden Untergrund;
- Fig. 2: ein Diagramm, das für eine Oszillationsperiode der in Fig. 1 dargestellten Verdichterwalze eine Vielzahl von dabei ermittelten Beschleunigungswertepaaren und eine durch die in zeitlicher Abfolge ermittelten Beschleunigungswertepaare aufgespannte Beschleunigungswertepaarkurve darstellt;
- Fig. 3: ein der Fig. 2 entsprechendes Diagramm, bei welchem die für eine Oszillationsperiode ermittelten Beschleunigungswertepaare zum Veranschaulichen einer Beschleunigungswertepaar-Schwingung in anderer Weise sortiert sind;
- Fig. 4: ein Diagramm, welches beruhend auf der Sortierung der Beschleunigungswertepaare gemäß Fig. 3 eine obere Einhüllende und eine untere Einhüllende der Beschleunigungswertepaar-Schwingung zeigt;
- Fig. 5: die Entwicklung eines mit dem erfindungsgemäßen Verfahren ermittelten Verdichtungszustandswertes mit zunehmender Anzahl an Überfahrten über einen zu verdichtenden Untergrund;
- Fig. 6: aufgetragen über der Anzahl an Überfahrten, die Entwicklung eines mit dem erfindungsgemäßen Verfahren ermittelten Verdichtungszustandswertes und eines durch am Untergrund vorgenommene Messungen ermittelten Verdichtungsgrads.

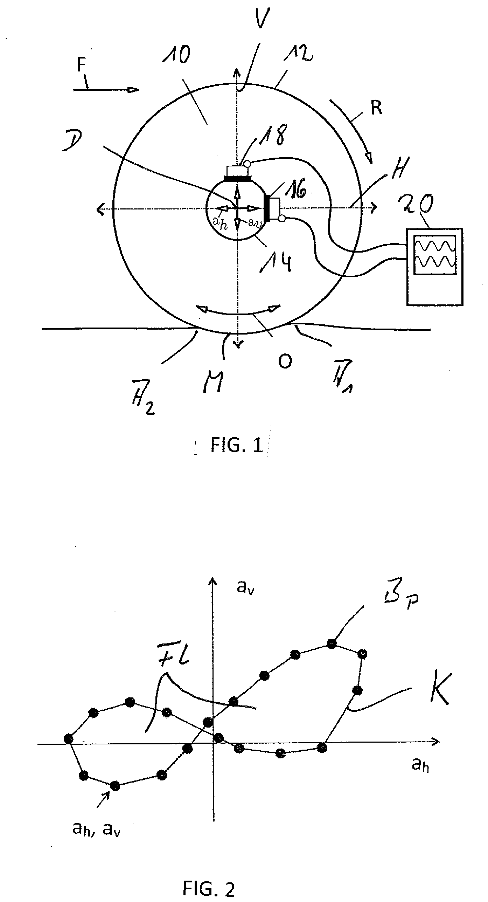

Die Fig. 1 zeigt in prinzipartiger Darstellung die Seitenansicht einer Verdichterwalze 10 eines Bodenverdichters. In dem von einem Walzenmantel 12 umschlossenen Innenraum der Verdichterwalze 10 ist eine in den Figuren nicht erkennbare Oszillationsanregungsanordnung vorgesehen, welche eine Mehrzahl von um zu einer Drehachse D der Verdichterwalze parallele Achsen zur Drehung antreibbare Unwuchtmassen umfassen kann. Durch die Oszillationsanregungsanordnung wird ein Oszillationsdrehmoment generiert, welches die Verdichterwalze 10 zur Durchführung einer oszillierenden Drehbewegung O um die Drehachse D anregt. Im Verdichtungsbetrieb, also bei der Vorwärtsbewegung eines Bodenverdichters in der Fahrtrichtung F wird diese Oszillationsdrehbewegung der Abrollbewegung der Verdichterwalze 10 in der Rollrichtung R überlagert.

Beispielsweise im Bereich einer Lagerschale 14 der Verdichterwalze 10 können Beschleunigungssensoren 16, 18 vorgesehen sein. Dabei kann der Beschleunigungssensor 16 zur Erfassung der Beschleunigung der Verdichterwalze 10 in einer Horizontalrichtung H ausgebildet sein, also einer Richtung, die im Wesentlichen parallel zu einer durch den zu verdichtenden Untergrund U aufgespannten Ebene liegt. Der Beschleunigungssensor 18 kann zur Erfassung einer Vertikalbeschleunigung aᵥ ausgebildet bzw. angeordnet sein, also einer Beschleunigung in einer Vertikalrichtung V, welche im Wesentlichen orthogonal zur Horizontalrichtung H und somit auch orthogonal zum zu verdichtenden Untergrund stehen kann. Die von den beiden Beschleunigungssensoren 16, 18 gelieferten Ausgangssignale können zu einer Datenerfassungs/Auswerteeinheit 20 übertragen werden.

Es sei hier darauf hingewiesen, dass die Beschleunigung auch an anderen Bereichen der Verdichterwalze 10, beispielsweise an der Innenseite des Walzenmantels 12 erfolgen kann, wobei dann jeweils eine Rückrechnung der Horizontal- bzw. der Vertikalbeschleunigung durch Koordinatentransformation erforderlich ist.

Die Horizontalbeschleunigung aₕ und die Vertikalbeschleunigung aᵥ werden während einer jeweiligen Periode der Oszillationsbewegung O mehrfach erfasst. Die Abtastrate sollte zumindest das Zehnfache der Oszillationsfrequenz der Verdichterwalze 10 betragen, so dass während jeder Periode der Oszillationsbewegung O mindestens zehn Beschleunigungswertepaare jeweils mit einem die Horizontalbeschleunigung aₕ repräsentierenden ersten Beschleunigungswert und einem die Vertikalbeschleunigung aᵥ repräsentierenden zweiten Beschleunigungswert erfasst bzw. ermittelt werden. Dabei sind idealerweise die beiden Beschleunigungswerte eines jeweiligen Beschleunigungswertepaares jeweils zum gleichen Zeitpunkt aufgenommene Werte der Vertikalbeschleunigung und der Horizontalbeschleunigung.

Bei der Abrollbewegung auf dem zu verdichtenden Untergrund U bildet sich unter der Verdichterwalze 10 eine in Fig. 1 erkennbare Mulde M, welche in der Fahrtrichtung F bzw. entgegengesetzt zur Fahrtrichtung F durch jeweilige Materialanhäufungen A₁ und A₂ eingegrenzt ist. Im Verlaufe der Oszillationsbewegung der Verdichterwalze 10 oszilliert die Verdichterwalze 10 in der Mulde M hin und her und erfährt dabei nicht nur eine durch das Oszillationsdrehmoment generierte Beschleunigung in der Horizontalrichtung H, sondern durch das periodische Auf- und Abrollen an den Materialanhäufungen A₁ und A₂ auch eine Beschleunigung in der Vertikalrichtung V. Während jeder Oszillationsperiode bewegt sich die Verdichterwalze 10 bei jeder der beiden Materialanhäufungen A₁ und A₂ einmal aufwärts und einmal abwärts, so dass die Frequenz der Vertikalbeschleunigung der doppelten Frequenz der Horizontalbeschleunigung entspricht.

Die Fig. 2 zeigt ein Diagramm bzw. Koordinatensystem, in welchem dem ersten Beschleunigungswert, also der Horizontalbeschleunigung aₕ, die Horizontalachse und dem zweiten Beschleunigungswert, also der Vertikalbeschleunigung aᵥ, die Vertikalachse zugeordnet ist. Die Fig. 2 zeigt eine Mehrzahl von jeweiligen Beschleunigungswertepaaren B_{P}, wobei jedes Beschleunigungswertepaar B_{P} repräsentiert ist durch einen Wert der Horizontalbeschleunigung aₕ und einem zugeordneten, also im Wesentlichen zum gleichen Zeitpunkt aufgenommenen Wert der Vertikalbeschleunigung aᵥ. Die Fig. 2 zeigt Beschleunigungswertepaare B_{P} für eine Periode der Oszillationsbewegung O der Verdichterwalze 10. Die in zeitlicher Abfolge aufgenommenen bzw. ermittelten Beschleunigungswertepaare B_{P} definieren in ihrer zeitlichen Abfolge eine Beschleunigungswertepaarkurve K, deren Form im Wesentlichen einer liegenden "8" entspricht. Diese Form ist dadurch bedingt, dass, wie vorangehend dargelegt, während einer Periode der Oszillationsbewegung O, also zwischen den beiden Extremwerten der Horizontalbeschleunigung aₕ, zwei Perioden der Vertikalbeschleunigung auftreten, also die Vertikalbeschleunigung insgesamt viermal ihr Vorzeichen wechselt.

Im Verlaufe eines Verdichtungsvorgangs nimmt der Verdichtungsgrad des zu verdichtenden Untergrunds U mit der Anzahl an Überfahrten durch einen Bodenverdichter allmählich zu. Mit zunehmender Verdichtung nimmt das Ausmaß, in welchem die Verdichterwalze 10 sich in den Untergrund U eindrücken kann, ab, was einer Abnahme der Tiefe der Mulde M und einer Abnahme der Höhe der Materialanhäufungen A₁ und A₂ entspricht. Mit der Abnahme der Muldentiefe und der Höhe der Materialanhäufungen A₁ und A₂ nimmt die Härte des Untergrunds U zu. Sowohl die Tiefe der Mulde M bzw. die Höhe der Materialanhäufungen A₁ und A₂, als auch die Härte des Untergrunds, auf welchem die Verdichterwalze 10 ihre Oszillationsbewegung O ausführt, beeinflussen die während einer jeweiligen Periode der Oszillationsbewegung O auftretenden Werte der Horizontalbeschleunigung aₕ und der Vertikalbeschleunigung aᵥ. Es wurde festgestellt, dass die von der Beschleunigungswertepaarkurve K umgrenzte Fläche mit zunehmendem Verdichtungsgrad ebenfalls zunimmt, insbesondere auch deshalb, da mit zunehmender Verdichtung und somit zunehmender Härte des Untergrunds auch die Horizontalbeschleunigung aₕ zunimmt und somit die liegende "8" breiter wird. Unter Berücksichtigung der für eine jeweilige Periode der Oszillationsbewegung O ermittelten Beschleunigungswertepaare besteht somit die Möglichkeit, einen Rückschluss auf den Verdichtungszustand des zu verdichtenden Untergrunds U zu ziehen, insbesondere durch Bestimmung der Größe der durch die Beschleunigungswertepaare B_{P} bzw. die Beschleunigungswertepaarkurve K in dem Beschleunigungswertediagramm der Fig. 2 umgrenzten Fläche.

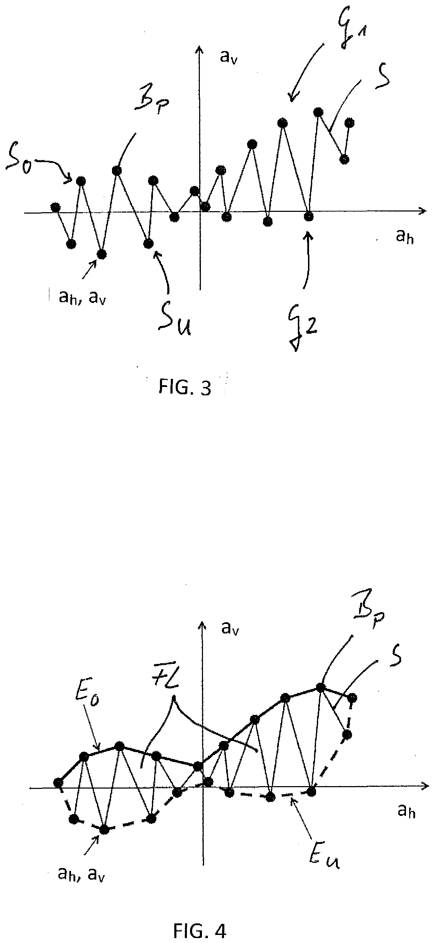

Zur Ermittlung dieser Fläche kann in verschiedener Weise vorgegangen werden. Beispielsweise ist es möglich, die Beschleunigungswertepaare B_{P} nicht in zeitlicher Abfolge aufeinanderfolgend zu sortieren bzw. zu verbinden, um die in Fig. 2 dargestellte Beschleunigungswertepaarkurve K zu erhalten, sondern derart, dass beispielsweise beginnend bei dem Beschleunigungswertepaar mit dem kleinsten Wert der Horizontalbeschleunigung aₕ alternierend Beschleunigungswertepaare, welche ein lokales Minimum bzw. ein lokales Maximum bilden, ausgewählt werden, um eine fiktive Beschleunigungswertepaar-Schwingung S zu definieren, wie sie in Fig. 3 veranschaulicht ist. Dabei kann beispielsweise so vorgegangen werden, dass bei entsprechender Abfolge der Beschleunigungswertepaare B_{P} alternierend ein Beschleunigungswertepaar B_{P} zum Definieren eines lokalen Minimums, also eines unteren Scheitelbereichs S_{U}, und eines lokalen Maximums, also eines oberen Scheitelbereichs So herangezogen werden. Sollte beispielsweise aufgrund der zeitlichen Abfolge der Bereitstellung der Beschleunigungswertepaare B_{P} sich eine Konstellation ergeben, bei welcher zwischen zwei oberen Scheitelpunkten S_{O} zwei oder mehrere an sich jeweils einen unteren Scheitelpunkt definierende Beschleunigungswertepaare liegen, so kann für die Zwecke der Ermittlung der Beschleunigungswertepaar-Schwingung S jeweils dasjenige Beschleunigungswertepaar B_{P} herangezogen werden, welches tatsächlich das lokale Minimum bzw. im anderen Falle das lokale Maximum definiert.

Die in ihrer Gesamtheit die Beschleunigungswertepaar-Schwingung S definierenden Beschleunigungswertepaare werden in zwei Gruppen aufgegliedert, nämlich eine Gruppe G₁, welche die jeweilige obere Scheitelbereiche S_{O} definierenden Beschleunigungswertepaare Bₚ umfasst, und eine zweite Gruppe G₂, welche die die unteren Scheitelbereiche S_{U} definierenden Beschleunigungswertepaare B_{P} umfasst. Dabei können die beiden äußersten Horizontalbeschleunigungswerte vorteilhafterweise jeweils beiden Gruppen G₁ und G₂ zugeordnet werden.

Auf Grundlage der den beiden Gruppen G₁ und G₂ jeweils zugeordneten Beschleunigungswertepaare B_{P} werden mit entsprechenden mathematischen Methoden jeweils eine obere Einhüllende E_{O} und eine untere Einhüllende E_{U} der Beschleunigungswertepaar-Schwingung S ermittelt.

Die als Indikator für den Verdichtungszustand des zu verdichtenden Untergrunds U erfindungsgemäß zu ermittelnde Größe der Fläche FL kann nunmehr berechnet werden als die zwischen den beiden Einhüllenden E_{O} und E_{U} eingeschlossene Fläche. Hierzu kann beispielsweise eine Flächenberechnung vermittels einer nummerischen Integration mit dem Trapezverfahren verwendet werden. Der Flächenwert, welcher die Einheit m²/s⁴ aufweist, repräsentiert somit einen FDVK-Wert, also einen Wert für eine flächendeckende dynamische Verdichtungskontrolle, der im Verlaufe eines Verdichtungsvorgangs erfasst bzw. ermittelt werden kann. Dieser Wert kann beispielsweise mit Parametern des Verdichtungsprozesses oder mit Maschinenparametern, wie z. B. den Durchmesser der Verdichterwalze oder der Linienlast, der schwingenden Masse derselben oder dem Unwuchtmoment, normiert werden, um eine leichte handhabbare bzw. auch besser vergleichbare Größe zu erhalten.

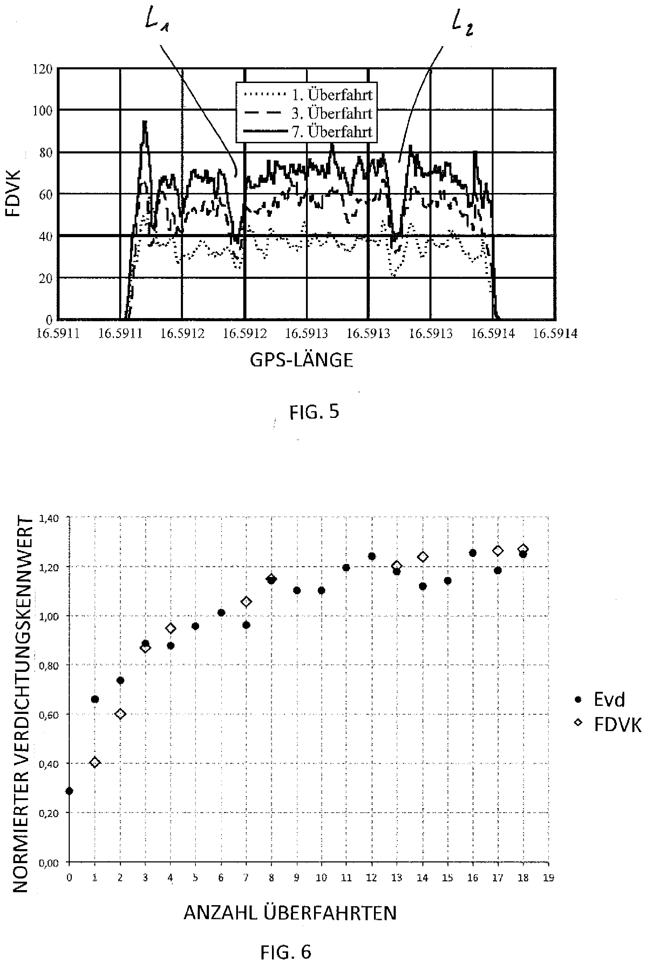

Die Fig. 5 zeigt für einen durch die GPS-Länge repräsentierten Längenbereich eines zu verdichtenden Untergrunds U die Entwicklung der in der vorangehend beschriebenen Art und Weise ermittelten Größe der Fläche FL, in Fig. 5 als FDVK bezeichnet. deutlich zu erkennen ist, dass mit zunehmender Anzahl der Überfahrten eine kontinuierliche Verschiebung dieses Wertes nach oben auftritt. An zwei lokalen Bereichen L₁ und L₂ sind Schwachstellen vorhanden, also Stellen, in welchen beispielsweise aufgrund mangelnder Vorbereitung des Untergrunds eine wesentliche Verdichtung nicht auftreten kann.

Die Fig. 6 zeigt einen Vergleich des mit dem erfindungsgemäßen Verfahren aufgenommenen Flächenwertes FDVK mit einem mit normierten Messverfahren ermittelten und einem dynamischen Verformungsmodul entsprechenden Wert Evd. Die Entwicklung dieser beiden Werte mit zunehmender Anzahl der Überfahrten läuft nahezu vergleichbar ab, wodurch erkennbar wird, dass mit dem erfindungsgemäßen Verfahren eine Größe bereitgestellt wird, welche in Echtzeit, also während der Durchführung eines Verdichtungsvorgangs, einen präzisen Rückschluss auf den tatsächlich vorliegenden Verdichtungsgrad des zu verdichtenden Untergrunds zulässt.

Es sei abschließend darauf hingewiesen, dass die vorangehend unter Bezugnahme auf die Diagramme bzw. Koordinatensysteme der Fig. 2 bis 4 und die darin eingetragenen Beschleunigungswertepaare bzw. Kurven veranschaulichte Ermittlung des Flächenwertes tatsächlich nicht das Eintragen der jeweiligen Beschleunigungswerte bzw. Beschleunigungswertepaare in Diagramme und das Auswerten der Diagramme erfordert, sondern beruhend auf mathematischen Verfahren durchgeführt wird, die jedoch durch die verschiedenen Diagramme und die darin eingetragenen Kurven darstellbar sind. im Sinne der vorliegenden Erfindung bedeutet also beispielsweise das Definieren einer Beschleunigungswertepaar-Schwingung nicht bzw. nicht nur, dass eine derartige Schwingung in ein Diagramm eingezeichnet wird, sondern dass entsprechende, eine derartige Schwingung repräsentierende Werte- bzw. Koordinatenpunkte bestimmt werden und zur weiteren mathematischen Verarbeitung herangezogen werden.

## Patentansprüche

1. Verfahren zum Ermitteln des Verdichtungszustandes eines vermittels eines wenigstens eine um eine Walzendrehachse (D) drehbare Verdichterwalze (10) umfassenden Bodenverdichters zu verdichtenden Untergrundes (U), wobei wenigstens einer Verdichterwalze (10) des Bodenverdichters eine Oszillationsanregungsanordnung zugeordnet ist zur Erzeugung eines diese Verdichterwalze (10) zu einer oszillierenden Drehbewegung (O) um die Walzendrehachse (D) anregenden Oszillationsdrehmomentes, wobei das Verfahren die Maßnahmen umfasst:
a) während wenigstens einer Periode der Oszillationsbewegung (O) der Verdichterwalze (10), wiederholtes Ermitteln eines eine Beschleunigung der Verdichterwalze (10) in einer ersten Richtung (H) repräsentierenden ersten Beschleunigungswertes (aₕ), wobei die erste Richtung (H) im Wesentlichen einer Horizontalrichtung (H) entspricht,
b) in Zuordnung zu jedem ersten Beschleunigungswert (aₕ), Ermitteln eines eine Beschleunigung der Verdichterwalze (10) in einer zweiten Richtung (V) repräsentierenden zweiten Beschleunigungswertes (aᵥ) zum Bereitstellen von Beschleunigungswertepaaren (B_{P}) jeweils aus einem ersten Beschleunigungswert (aₕ) und einem zugeordneten zweiten Beschleunigungswert (aᵥ), wobei die zweite Richtung (V) im Wesentlichen einer Vertikalrichtung (V) entspricht,
c) für wenigstens eine Oszillationsperiode, Bestimmen eines den Verdichtungszustand des Untergrunds (U) repräsentierenden Verdichtungszustandswertes (FDVK) beruhend auf für diese Oszillationsperiode ermittelten Beschleunigungswertepaaren (B_{P}) als einen Flächenwert einer von einer durch in einer Oszillationsperiode aufeinander folgende Beschleunigungswertepaare (B_{P}) gebildeten Beschleunigungswertepaarkurve (K) umgrenzten Fläche (FL) in einem Beschleunigungswertediagramm, wobei das Beschleunigungswertediagramm definiert ist mit einer den ersten Beschleunigungswerten (aₕ) zugeordneten ersten Diagrammachse und einer den zweiten Beschleunigungswerten (aᵥ) zugeordneten zweiten Diagrammachse.

2. Verfahren nach Anspruch 1, **dadurch gekennzeichnet, dass** bei der Maßnahme c):
- auf Grundlage einer Abfolge von Beschleunigungswertepaaren (B_{P}) entlang der ersten Diagrammachse eine Beschleunigungswertepaar-Schwingung (S) definiert wird, wobei Beschleunigungswertepaare (B_{P}) einer ersten Gruppe (G₁) von Beschleunigungswertepaaren (B_{P}) und einer zweiten Gruppe (G₂) von Beschleunigungswertepaaren (B_{P}) derart zugeordnet werden, dass die Beschleunigungswertepaare (B_{P}) der ersten Gruppe (G₁) von Beschleunigungswertepaaren (B_{P}) im Wesentlichen obere Scheitelbereiche (S_{O}) der Beschleunigungswertepaar-Schwingung (S) bilden und die Beschleunigungswertepaare (B_{P}) der zweiten Gruppe (G₂) von Beschleunigungswertepaaren (B_{P}) im Wesentlichen untere Scheitelbereiche (S_{U}) der Beschleunigungswertepaar-Schwingung (S) bilden,
- beruhend auf der ersten Gruppe (G₁) von Beschleunigungswertepaaren (B_{P}) eine obere Einhüllende (E_{O}) ermittelt wird und beruhend auf der zweiten Gruppe (G₂) von Beschleunigungswertepaaren (BP) eine untere Einhüllende (E_{U}) ermittelt wird,
- der Flächenwert im Wesentlichen als die zwischen der oberen Einhüllenden (E_{O}) und der unteren Einhüllenden (E_{U}) begrenzte Fläche (FL) bestimmt wird.

## Claims

1. Method for determining the compaction state of a ground (U) to be compacted using a soil compactor comprising at least one compactor roller (10) rotatable about a roller axis of rotation (D), wherein an oscillation-inducing arrangement is associated with at least one compactor roller (10) of the soil compactor for generating an oscillating torque inducing an oscillating rotation (O) in said compactor roller (10) about the roller axis of rotation (D), wherein the method comprises the following steps:
a) during at least one period of the oscillating movement (O) of the compactor roller (10), repeatedly determining a first acceleration value (aₕ) representing an acceleration of the compactor roller (10) in a first direction (H), wherein the first direction (H) corresponds essentially to a horizontal direction (H),
b) in association with each first acceleration value (aₕ), determining a second acceleration value (aᵥ) representing an acceleration of the compactor roller (10) in a second direction (V) in order to provide acceleration value pairs (B_{P}), each consisting of a first acceleration value (aₕ) and an associated second acceleration value (aᵥ), wherein the second direction (V) corresponds essentially to a vertical direction (V),
c) for at least one period of oscillation, defining a compaction state value (FDVK) representing the compaction state of the ground (U) based upon acceleration value pairs (B_{P}) determined for this the period of oscillation as a surface value of a surface (FL) of an acceleration value pair curve (K) defined by consecutive acceleration value pairs (B_{P}) during an oscillation period in a graph of acceleration values wherein the acceleration value graph is defined by a first graph axis associated with the first acceleration values (aₕ) and a second graph axis associated with the second acceleration values (aᵥ).

2. Method according to claim 1, **characterized in that** during step c)
- an acceleration value pair vibration (S) is defined based upon a sequence of acceleration value pairs (B_{P}) along the first graph axis, wherein acceleration value pairs (B_{P}) are associated to a first group (G₁) of acceleration value pairs (B_{P}) and a second group (G₂) of acceleration value pairs (B_{P}) in such a way that the acceleration value pairs (B_{P}) from the first group (G₁) of acceleration value pairs (B_{P}) will generally form the upper end (S_{O}) of the acceleration value pair vibration (S) and the acceleration value pairs (B_{P}) from the second group (G₂) of acceleration value pairs (B_{P}) generally form the lower end (S_{U}) of the acceleration value pair vibration (S),
- based upon the first group (G₁) of acceleration value pairs (B_{P}), an upper envelope (E_{O}) is determined, and, based upon the second group (G₂) of acceleration value pairs (BP), a lower envelope (E_{U}) is determined,
- the area value will generally be defined as being the area (FL) bordered by the upper envelope (E_{O}) and the lower envelope (E_{U}).

## Revendications

1. Un procédé pour déterminer l'état de compactage d'un sol (U) à compacter par un compacteur de sol comprenant au moins un rouleau de compactage (10), rotatif autour d'un axe de rouleau (D), un arrangement d'initiation d'oscillation étant associé à au moins un rouleau de compactage (10) du compacteur de sol pour générer une torque d'oscillation entraînant un mouvement rotatif oscillatoire (O) dudit rouleau de compactage (10) autour de l'axe de rouleau (D), le procédé comprenant les mesures suivantes:
a) pendant au moins une période du mouvement oscillatoire (O) du rouleau de compactage (10), déterminer de manière répétitive une première valeur d'accélération (a_{H}) représentant une accélération du rouleau de compactage (10) dans un premier sens (H), le premier sens (H) correspondant essentiellement à un sens horizontal (H),
b) en association à chaque première valeur d'accélération (a_{H}) déterminer une deuxième valeur d'accélération (a_{V}), représentant une accélération du rouleau de compactage (10) dans un deuxième sens (V), pour prévoir des paires de valeurs d'accélération respectives (B_{P}) d'une première valeur d'accélération (a_{H}) et d'une deuxième valeur d'accélération associée (a_{V}), le deuxième sens (V) correspondant essentiellement à un sens vertical (V),
c) pendant au moins une période oscillatoire, déterminer une valeur d'état de compactage (FDVK) représentant l'état de compactage du sol (U) sur la base de paires de valeurs d'accélération (B_{P}) déterminées pour cette période oscillatoire en tant qu'une valeur de surface d'une surface (FL) définie par une courbe de paires de valeurs d'accélération (K) basé sur des paires de valeurs d'accélération (B_{P}) consécutives pendant une période oscillatoire dans un graphe de valeurs d'accélération, le graphe de valeurs d'accélération étant défini avec un premier axe graphique associé aux premières valeurs d'accélération (aₕ) et un deuxième axe graphique associé aux deuxièmes valeurs d'accélération (aᵥ).

2. Procédé selon la revendication 1, **caractérisé en ce que** pendant la mesure c):
- une vibration de paires de valeurs d'accélération (S) est définie sur la base d'une séquence de paires de valeurs d'accélération (B_{P}) le long du premier axe graphique, où des paires de valeurs d'accélération (B_{P}) sont associées à un premier groupe (G₁) de paires de valeurs d'accélération (B_{P}) et à un deuxième groupe (G₂) de paires de valeurs d'accélération (B_{P}) de telle manière que les paires de valeurs d'accélération (B_{P}) du premier groupe (G₁) de paires de valeurs d'accélération (B_{P}) vont essentiellement former les extrémités supérieures (S_{O}) de la vibration de paires de valeurs d'accélération (S) et les paires de valeurs d'accélération (B_{P}) du deuxième groupe (G₂) de paires de valeurs d'accélération (B_{P}) vont essentiellement former les extrémités inférieures (S_{U}) de la vibration de paires de valeurs d'accélération (S),
- sur la base du premier groupe (G₁) de paires de valeurs d'accélération (B_{P}), une enveloppe supérieure (E_{O}) est déterminée, et sur la base du deuxième groupe (G₂) de paires de valeurs d'accélération (B_{P}), une enveloppe inférieure (E_{U}) est déterminée,
- la valeur de surface est essentiellement déterminée en tant que la surface (FL) comprise entre l'enveloppe supérieure (E_{O}) et l'enveloppe inférieure (E_{U}).
